# EUROPÄISCHE PATENTANMELDUNG

(11) **EP 1 484 167 A2**
(43) Veröffentlichungstag der Anmeldung: **08.12.2004**
(21) Anmeldenummer: 04013216.9
(22) Anmeldetag: 04.06.2004
(51) Int. Cl.: B29C 70/76, B29C 45/14

(54) **Netz mit einem Rahmen aus thermoplastischem Kunststoff und Verfahren zu seiner Herstellung**

(30) Priorität: 07.06.2003 DE 10325913
(71) Anmelder: Ticona GmbH, 65451 Kelsterbach (DE)
(72) Erfinder: Hiekisch, Rochus, 65232 Taunusstein (DE); Weber, Gerhard, 60316 Frankfurt am Main (DE); Prigandt, Marco, 63796 Kahl am Rhein (DE); Körnig, Jürgen, 65931 Frankfurt am Main (DE)

(57) **Zusammenfassung**

Beschrieben wird ein Netz mit Rahmen aus thermoplastischem Kunststoff und ein Verfahren zu seiner Herstellung.

## Beschreibung

Die vorliegende Erfindung betrifft ein Netz mit Rahmen aus thermoplastischem Kunststoff und ein Verfahren zu seiner Herstellung.

Für einige industrielle Anwendungsformen werden Netze gebraucht, die in einen Rahmen eingebracht sind bzw. Netze, die mit einer Leiste versehen sind. Solche in einem Rahmen oder an einer Leiste fixierten Netze können beispielsweise als Blenden, als Moskitonetze, als Filter oder als Windabweiser verwendet werden.

Es stellt sich hierbei die Frage, auf welche Weise solche umrahmten bzw. an einer Leiste fixierten Netze gefertigt werden können, hierbei insbesondere aus welchem Material das Netz und/oder der Rahmen bzw. die Leiste zweckmäßigerweise gefertigt sein können und wie die Umrahmung des Netzes mit dem Rahmen zweckmäßigerweise erfolgen kann.

Wichtig ist hierbei insbesondere, dass das Netz bei der Herstellung des umrahmten bzw. fixierten Netzes möglichst nicht beschädigt werden darf, dass das Netz möglichst gleichmäßig angeordnet sein muss, dass es im Rahmen bzw. entlang der Leiste möglichst keine Falten aufweisen darf und dass es gegebenenfalls eine für die jeweilige Anwendung erforderliche Spannung aufweisen muss. Ferner ist gegebenenfalls zu berücksichtigen, dass das Netz möglichst gleichmäßig am Rahmen fixiert sein muss und die Ablösung des Netzes vom Rahmen möglichst verhindert werden muss und dass die Kraftübertragung auf den Rahmen möglichst gleichmäßig erfolgen können muss, damit eine Krafteinwirkung auf das Netz von außen möglichst effektiv abgefangen werden kann.

Es wurde nun überraschenderweise gefunden, dass umrahmte Netze auf recht einfache Weise hergestellt werden können, wenn man ein mehrteiliges, insbesondere zweiteiliges, Werkzeug verwendet, das Kavitäten aufweist, die die Form des zu bildenden Rahmens bzw. der zu bildenden Leiste vorgeben.

Das mehrteilige Werkzeug umfasst hierbei Werkzeugteile, die so geformt sind, dass bei Aneinanderlegen bzw. Aufeinanderpressen der Werkzeugteile eine Spritzform mit Kavitäten entsteht, die die Form des zu bildenden Rahmens vorgeben. Das Werkzeug kann beispielsweise aus Stahl gefertigt sein. Zwei oder mehr der verschiedenen Werkzeugteile können auch aneinander befestigt sein, beispielsweise mittels Schanieren. In einer bevorzugten Ausführungsform umfasst das Werkzeug zwei Werkzeugteile.

Erfindungsgemäß wurde nun gefunden, dass man ein Netz mit einem Rahmen versehen kann, indem man das Netz in die Trennebene solcher Werkzeugteile einlegt und die Werkzeugteile anschließend unter Einschluss des Netzes aneinanderlegt bzw. aneinanderpresst, und anschließend einen flüssigen thermoplastischen Kunststoff durch einen dafür vorgesehenen Einlass unter Verwendung einer dafür vorgesehenen Maschine in die Kavitäten des Werkzeuges einspritzt und diesen anschließend erkalten lässt.

Unter "Rahmen" ist erfindungsgemäß zu verstehen sowohl ein geschlossener, beispielsweise vierseitiger oder kreisförmiger, Rahmen wie auch ein nach einer Seite hin offener, also beispielsweise dreiseitiger oder halbkreisförmiger, Rahmen. Des weiteren sind darunter aber auch alle denkbaren anderen Rahmenformen zu verstehen. Unter "Rahmen" ist erfindungsgemäß insbesondere auch zu verstehen ein einseitiger oder zweiseitiger Rahmen, also eine Leiste bzw. ein Winkel, an dem das Netz befestigt ist. Die Rahmenseiten können hierbei sowohl gerade als auch ein- oder mehrfach um jeden beliebigen Winkel, vorzugsweise um einen Winkel von bis zu 120° gekrümmt, oder auf sonstige Weise geformt sein.

Die Seiten bzw. Leisten des Rahmens können sowohl planar angeordnet sein, so dass sie mit dem Netz in einer Ebene liegen und das Netz, etwa im Falle eines vierseitigen oder kreisförmigen geschlossenen Rahmes, vom Rahmen vollständig umschlossen wird. Die Seiten des Rahmens können aber etwa auch senkrecht zur Ebene stehen, so dass das Netz etwa im Falle eines vierseitigen oder kreisförmigen geschlossenen Rahmens nur auf einer Seite vom Rahmen umschlossen wird und in Richtung der anderen Seite eine schlauchförmige Struktur aufweist. Das andere Ende des schlauchförmigen Netzes kann in diesem Fall ebenfalls durch einen erfindungsgemäßen Rahmen umrahmt sein, so dass das schlauchförmige Netz von belden Seiten durch einen entsprechenden Rahmen begrenzt wird. Ebenso ist erfindungsgemäß möglich, dass sich das Netz zwischen zwei dreiseitigen und/oder halbkreisförmigen Rahmen oder zwischen zwei Leisten befindet.

Ebenso sind hinsichtlich der Breite und Dicke des Rahmens alle möglichen Maße denkbar. Vorzugsweise hat der Rahmen eine Breite zwischen 1 mm und 10 cm, besonders bevorzugt zwischen 5 mm und 5 cm. Der Rahmen hat ferner vorzugsweise eine Dicke zwischen 0,5 mm und 1 cm, besonders bevorzugt zwischen 1 mm und 5 mm. Die Form des Rahmens ist beliebig.

Das Einspritzen des Kunststoffes erfolgt bei einer Temperatur leicht oberhalb des Schmelzpunktes des Kunststoffes, in der Regel handelt es sich hierbei um eine Temperatur zwischen 180 °C und 350 °C, besonders bevorzugt um eine Temperatur zwischen 190 °C und 320 °C. Das Einspritzen des Kunststoffes erfolgt erfindungsgemäß vorzugsweise mit einem Druck zwischen 400 und 1000 bar, vor allem mit einem Druck zwischen 500 und 800 bar, insbesondere zwischen 600 und 700 bar. Als Spritzgerät für das Einspritzen des thermoplastischen Kunststoffes kann beispielsweise verwendet werden eine 90 to Arburg Spritzgießmaschine. Um für eine möglichst niedrige Druckbeaufschlagung auf das Netz zu sorgen, wird das Werkzeug (die Spritzgießform) in einer bevorzugten Ausführungsform über einen Filmanguß angespritzt.

Nachdem das Werkzeug mit dem thermoplastischen Kunststoff gefüllt ist, lässt man die Form langsam abkühlen, um die Kristallisation des Kunststoffes und damit die Ausbildung des Rahmens zu ermöglichen.

Das Werkzeug kann hierfür zur Verlangsamung der Kristallisation des thermoplastischen Kunststoffes und insbesondere zur Verhinderung des Abschreckens des flüssigen Kunststoffes, was die Ausbildung amorphen Materials zur Folge haben könnte, beheizt sein, beispielsweise mit einer Temperatur zwischen 50 und 150 °C, insbesondere mit einer Temperatur von etwa 90 °C.

Es zeigte sich hierbei überraschenderweise, dass durch dieses Verfahren umrahmte Netze mit gleichmäßiger Netzspannung und ohne Faltenbildung erhalten werden können.

Es war aus vielerlei Gründen zu befürchten, dass das Verfahren auf diese Weise nicht hätte durchgeführt werden können. So hätte der Fachmann etwa erwarten können, dass es beim Einspannen des Netzes in das Werkzeug unter Anlegung hoher Schließkräfte zur Schädigung bzw. mechanischen Deformierung des Netzes kommt.

Außerdem war zu befürchten, dass es zu einer Schwimmhautbildung kommt oder dass das Netz während des Umspritzens an der Schmelzefront Falten bildet und/oder dass das Netz während des Umspritzens aufgrund der Strömungskräfte bzw. durch den Wärmeeintrag geschädigt wird.

Es wurde erfindungsgemäß jedoch gefunden, dass diese Probleme entweder gar nicht oder aber nur bedingt auftreten und dass das Herstellen eines umrahmten Netzes durch ein erfindungsgemäßes Verfahren überraschenderweise auf einfache Weise möglich ist.

Gegenstand der vorliegenden Erfindung ist daher ein Verfahren zur Herstellung eines flexiblen Netzes mit einem Rahmen aus thermoplastischem Kunststoff unter Verwendung eines mehrteiligen, Kavitäten aufweisenden Werkzeuges, folgende Schritte umfassend:
a) das Netz wird in die Trennebene der Werkzeugteile eingelegt und dort fixiert,
b) der thermoplastische Kunststoff wird in flüssiger Form in die Kavitäten des Werkzeuges eingespritzt und erkalten gelassen.
Das Werkzeug kann anschließend entfernt werden.

Um sicherzustellen, dass das Netz die erforderliche Spannung behält und um des weiteren sicherzustellen, dass das thermoplastische Polymer nicht aus dem Spalt der beiden Werkzeugteile entweicht, kann zwischen den beiden Werkzeugteilen eine hohe Schließkraft angelegt werden. Überraschenderweise übersteht das Netz die hohe Schließkraft, ohne allzu großen Schaden zu nehmen. Die anzulegende Schließkraft kann hierbei zwischen 500 und 1500 kN (kt), vorzugsweise zwischen 800 und 1000 kN liegen.

Das Kunststoffnetz wird in einer bevorzugten Ausführungsform erfindungsgemäß so in die Trennebene des Werkzeugs eingelegt und dort fixiert, dass es über die Rahmenkontur hinausgeht, so dass es außerhalb des zu spritzenden Rahmens mitgehalten werden kann, damit das Netz nicht durch die Schmelzefront nach innen weggedrückt werden kann.

In einer bevorzugten Ausführungsform wird das Netz vorgespannt, bevor die Werkzeugteile unter Einschluss des Netzes aneinandergelegt bzw. aneinandergepresst werden, um sicherzustellen, dass das umrahmte Netz die erforderliche Spannung besitzt.

In einer bevorzugten Ausführungsform wird hierbei die Netzspannung apparativ durch entsprechende Vorrichtungen zur Spannung des Netzes von außen aufrechterhalten. Der Vorteil ist, dass dann die Schließkraft ohne Verlust der Netzspannung verhältnismäßig gering gehalten werden kann, und dadurch die Schädigung des Netzes weitestgehend verhindert werden kann. In dieser Ausführungsform kann dann das Entweichen des thermoplastischen Polymers gegebenenfalls durch andere Mittel, beispielsweise durch Verwendung eines in den Werkzeugteilen angebrachten Dichtringes, verhindert werden.

Bei dem erfindungsgemäß verwendbaren Netz handelt es sich vorzugsweise um ein Kunststoffnetz, besonders bevorzugt um ein gewebtes Kunststoffnetz, beispielsweise um ein Kunststoffnetz aus einem Werkstoff, der Polyester enthält. Es handelt sich hierbei vorzugsweise um ein sehr temperaturbeständiges Netz. Die Dicke der Netzfäden kann beispielsweise zwischen 0,1 und 0,4 mm betragen. Der Abstand der Fäden kann beispielsweise zwischen 0,1 und 1 mm betragen.

Bei den erfindungsgemäß zur Herstellung des Rahmens verwendbaren thermoplastischen Kunststoffen kann es sich erfindungsgemäß um jedes beliebige dem Fachmann bekannte thermoplastische Polymer und auch um Materialien mit vergleichbaren Eigenschaften handeln.

In bevorzugten Ausführungsformen handelt es sich bei dem thermoplastischen Polymer um ein solches, das ein Polyalkylen, vor allem Polypropylen (PP), ein Polyoxyalkylen, vor allem Polyoxymethylen (POM), ein Polyamid (PA), ein Polyphenylensulfid (PPS) und/oder ein flüssigkristallines Polymer (liquid crystalline polymer (LCP)) umfasst.

In besonders bevorzugten Ausführungsformen handelt es sich bei dem thermoplastischen Polymer um einen Faserwerkstoff auf Polymerbasis. Das Polymer ist hierbei vorzugsweise aus den zuvor genannten ausgewählt. Bei dem Faserwerkstoff kann es sich beispielsweise um eine Stahlfaser, eine Kohlenstofffaser oder eine Aramidfaser handeln. Besonders bevorzugt handelt es sich jedoch um eine Glasfaser, insbesondere um eine Langglasfaser.

Der Faseranteil im thermoplastischen Polymer beträgt vorzugsweise bis zu 60 %, vor allem zwischen 10 und 40 %, insbesondere etwa 30 %.

Das thermoplastische Polymer kann ferner dem Fachmann bekannte Füllstoffe enthalten.

In bevorzugten Ausführungsformen handelt es sich bei dem thermoplastischen Polymer um POM (Hostaform® C9021 natur), POM mit 30 % Glasfasern (Hostaform® C9021 GV 1/30 natur), PP mit 30 % Langglasfasern (Celstran® PP-LGF30 natur), PA66 mit 30 % Langglasfasern (Celstran® PA66-LGF30 schwarz), PPS mit 40 % Glasfasern (Fortron® 1140L4 natur) oder LCP mit 30 % Glasfasern (Vectra® A130 E natur).

Ein besonderer Vorteil der Faserwerkstoffe auf Polymerbasis ist, dass es sich hierbei um sehr stabile Werkstoffe handelt. Zudem handelt es sich hierbei um sehr schwindungsarme Materialien. Dies ist insbesondere mit Hinblick auf die Netzspannung von Wichtigkeit. Würde sich der Rahmen nach der Herstellung bzw. im Laufe der Zeit zusammenziehen, würde er also hohes Schwindungsverhalten zeigen, so würde die Netzspannung entsprechend verloren gehen. Dies soll in der Regel möglichst verhindert werden.

Bei dem erfindungsgemäß zu verwendenden Werkzeug kann es sich um jede beliebige Spritzgießform, hierbei insbesondere um jede beliebige Metallform handeln. Das Werkzeug ist erfindungsgemäß so gefertigt, dass es an eine im Handel übliche Polymer-Spritzgießmaschine angeschlossen werden kann. Hierfür ist es insbesondere mit einer entsprechenden Öffnung versehen, in die das Polymer eingespritzt werden kann. Es kann sich hierbei um Metallplatten handeln, die mit entsprechenden Kavitäten versehen sind, die die Form des auszubildenden Rahmens vorgeben. Die Kavität kann sich hierbei sowohl auf einer Seite des Werkzeuges wie auch auf beiden Seiten des Werkzeuges befinden.

In einer besonderen Ausführungsform des erfindungsgemäßen Verfahrens werden Werkzeugteile verwendet, die beidseitig der Trennebene Kavitäten aufweisen. Die Umspritzung des Netzes kann in dieser Ausführungsform von einer oder von beiden Seiten des Werkzeuges aus erfolgen. Es hat sich hierbei gezeigt, dass es von Vorteil sein kann, wenn die Umspritzung nur von einer Seite erfolgt. In diesem Fall wird nämlich das Netz auf den Boden der gegenüberliegenden Kavität gedrückt. Hierdurch kann es zu einer weiteren Erhöhung der Netzspannung kommen, was beim Wunsch hoher Netzspannung im gebildeten Rahmen von Vorteil ist.

Gegenstand der vorliegenden Erfindung ist daher ein Werkzeug zur Herstellung eines mit einem thermoplastischen Kunststoff umrahmten Netzes, umfassend mindestens zwei Werkzeugteile, in deren Trennebene das Netz eingelegt werden kann, wobei die Werkzeugteile, inbesondere im Bereich der Trennebene, Kavitäten aufweisen, die die Form des zu bildenden Rahmes vorgeben und wobei die Werkzeugteile mit thermoplastischen Kunststoffen bespritzbar sind.

Eine Erhöhung der Netzspannung kann auch dadurch erreicht werden, dass Werkzeugteile verwendet werden, die mechanisch so geformt sind, dass sie beispielsweise Stege aufweisen, die über die Trennebene der Werkzeugteile hinaus in die Kavitäten der gegenüberliegenden Werkzeugteile hineinragen. Auf diese Weise kann erreicht werden, dass beim Aufeinanderlegen bzw. Aufeinanderpressen der Werkzeugteile die Netzspannung noch weiter erhöht wird. Auf diese Weise können Verluste der Netzspannung, wie sie durch Schwindung des Rahmens auftreten können, ausgeglichen werden. Gegenstand der vorliegenden Erfindung ist daher des weiteren ein Werkzeug, dass so gefertigt ist, dass das Netz beim Schließen des Werkzeuges auf die zuvor genannte Weise gespannt wird.

In weiteren bevorzugten Ausführungsformen des Werkzeuges sind Abdichtungen am Rande der Kavitäten und hierbei zumindest im Bereich der Trennebene der Werkzeugteile angebracht, um ein Ausfließen des thermoplastischen Polymers aus dem Werkzeug, insbesondere bei Anlegung geringer Schließkraft, zu verhindern. Die Abdichtung kann hierbei entweder auf Höhe der Trennebene abschließen, erfindungsgemäß jedoch auch über die Trennebene hinausragen und gegebenenfalls in die gegenüberliegende Kavität hineinragen, so dass beim Aufeinanderlegen bzw. Aneinanderpressen der Werkzeugteile ein Abdichten des Werkzeugs ermöglicht und damit das Austreten von thermoplastischem Polymer aus dem Spalt verhindert wird. Bei der Abdichtung kann es sich beispielsweise um eine Silicon-haltige Abdichtung handeln.

Die zuvor erwähnte Vorspannung des Netzes wie auch die Spannung des Netzes während des Spritzens des Rahmens kann in jeder dem Fachmann bekannten Weise erfolgen. Es ist jedoch wichtig darauf zu achten, dass das Netz einer gleichmäßigen Spannung ausgesetzt wird und dass Faltenbildung weitgehend vermieden wird.

Das Netz muss hierbei in besonderen Ausführungsformen beim Verfahren soweit ausgedehnt werden, dass trotz Schwindung des Rahmenkunststoffes während der Abkühlung die Netzspannung erhalten bleibt. Das Netz kann beispielsweise mittels Dornen, mittels gegebenenfalls über Kernzug gesteuerte Klemmleisten oder dadurch, dass beim Schließen des Werkzeugs die Kavität eine Eintauchbewegung vollzieht, fixiert werden. Das Netz kann des weiteren etwa über einen Spannrahmen, an dem das Netz befestigt ist, insbesondere unter Verwendung von Drähten oder Seilen, die das Netz am Spannrahmen fixieren und die eine Justierung der Netzspannung erlauben, vorgespannt werden.

Gegenstand der vorliegenden Erfindung ist daher ferner eine Vorrichtung zur Herstellung eines mit einem thermoplastischem Kunststoff umrahmten Netzes bzw. zur Herstellung eines Netzes, das an einer Leiste aus thermoplastischem Kunststoff befestigt ist, umfassend ein erfindungsgemäßes Werkzeug sowie eine Vorrichtung zur Spannung des Netzes wie zuvor beschrieben.

Falls die Netzspannung während des Gebrauchs nachlässt, kann das Netz über einen Nachstellmechanismus, welcher sich im Rahmen nachträglich einbauen lässt, zusätzlich nachgespannt werden. Es kann sich bei dem Nachstellmechanismus beispielsweise um eine Feder handeln, die in den Rahmen eingebaut wird. Wird ein mehrseitiger Rahmen verwendet, so muss entsprechend auf jeder Rahmenseite ein entsprechender Nachstellmechanismus eingebaut werden, um ein gleichmäßiges Nachstellen der Netzspannung zu ermöglichen.

Gegenstand der vorliegenden Erfindung ist daher des weiteren ein Netz, das an mindestens einem Rahmen aus thermoplastischem Kunststoff fixiert ist, wobei das umrahmte Netz vorzugsweise wie zuvor beschrieben durch Umspritzung mit thermoplastischem Kunststoff erhältlich ist. Das Netz ist hierbei aufgrund des Herstellungsverfahrnes in den Rahmen aus thermoplastischen Kunststoff eingebettet, wobei es, in Abhängigkeit vom Herstellungsverfahren, peripher am Rahmen fixiert ist oder von beiden Seiten durch die Formmasse aus thermoplastischem Kunststoff umschlossen wird. Gegenstand der vorliegenden Erfindung ist des weiteren insbesondere ein Netz, das an mindestens einem Rahmen aus thermoplastischem Kunststoff fixiert ist, das an mindestens einer Rahmenseite mindestens eines Rahmens einen Nachstellmechanismus, beispielsweise in Form einer Spannfeder oder in Form eines Schraubverschlusses, aufweist.

in einer besonderen Ausführungsform kann ein Netz auch mit mehreren Rahmen und/oder Leisten versehen sein und zwar sowohl durch gleichzeitige als auch zeitlich aufeinanderfolgende Umspritzung mit entsprechenden Rahmen. Die Rahmen können entsprechend nach der Fertigstellung mit Nachstellmechanismen, beispielsweise in Form von Spannfedern oder in Form von Schraubverschlüssen, versehen werden.

## Patentansprüche

1. Verfahren zur Herstellung eines flexiblen Netzes mit einem Rahmen aus thermoplastischem Kunststoff unter Verwendung eines mehrteiligen, Kavitäten aufweisenden Werkzeuges, folgende Schritte umfassend:
a) das Netz wird in die Trennebene der Werkzeugtelle eingelegt und dort fixiert,
b) der thermoplastische Kunststoff wird in flüssiger Form in die Kavitäten des Werkzeuges eingespritzt und erkalten gelassen.

2. Verfahren nach Anspruch 1, **dadurch gekennzeichnet, dass** das Netz so in die Trennebene des Werkzeugs eingelegt und dort fixiert wird, dass es über die Rahmenkontur hinausgeht.

3. Verfahren nach Anspruch 1, **dadurch gekennzeichnet, dass** das Netz durch Kraftanwirkung von außen vorgespannt wird.

4. Verfahren nach Anspruch 3, **dadurch gekennzeichnet, dass** die Vorspannung durch Dornen, Klemmen oder Seile erfolgt.

5. Verfahren nach Anspruch 1, **dadurch gekennzeichnet, dass** zusätzliche Netzspannung aufgebaut wird, indem das Netz beim Aufeinanderlegen der Werkzeugteile durch am Werkzeug befindliche Stege in die Kavitäten gedrückt wird.

6. Verfahren nach Anspruch 1, **dadurch gekennzeichnet, dass** das Netz soweit ausgedehnt wird, dass trotz Schwindung des Rahmenkunststoffes während der Abkühlung die Netzspannung erhalten bleibt.

7. Verfahren nach Anspruch 1, **dadurch gekennzeichnet, dass** es sich bei dem flexiblen Netz um ein gewebtes Netz handelt.

8. Verfahren nach Anspruch 1, **dadurch gekennzeichnet, dass** es sich bei dem Netz um ein Kunststoffnetz handelt.

9. Verfahren nach Anspruch 8, **dadurch gekennzeichnet, dass** es sich bei dem Kunststoffnetz um ein Polyester-haltiges Netz handelt.

10. Verfahren nach Anspruch 1, **dadurch gekennzeichnet, dass** es sich bei dem thermoplastischen Kunststoff um ein thermoplastisches Polymer handelt.

11. Verfahren nach Anspruch 1, **dadurch gekennzeichnet, dass** es sich bei dem thermoplastischen Kunststoff um einen Faserwerkstoff auf Polymerbasis handelt.

12. Verfahren nach Anspruch 1, **dadurch gekennzeichnet, dass** der Rahmen aus schwindungsarmen Produkten gespritzt wird.

13. Umrahmtes Netz, **dadurch gekennzeichnet, dass** es sich bei dem Netz um ein flexibles Netz handelt und dass der Rahmen aus thermoplastischem Kunststoff gefertigt ist.

14. Umrahmtes Netz nach vorhergehendem Anspruch, **dadurch gekennzeichnet, dass** es sich bei dem Netz um ein Kunststoffnetz handelt.

15. Umrahmtes Netz nach vorhergehendem Anspruch, **dadurch gekennzeichnet, dass** es sich bei dem Kunststoffnetz um ein Polyester-haltiges Netz handelt.

16. Umrahmtes Netz nach vorhergehendem Anspruch, **dadurch gekennzeichnet, dass** es sich bei dem thermoplastischen Kunststoff um ein thermoplastisches Polymer handelt.

17. Umrahmtes Netz nach vorhergehendem Anspruch, **dadurch gekennzeichnet, dass** es sich bei dem thermoplastischen Kunststoff um einen Faserwerkstoff auf Polymerbasis handelt.

18. Umrahmtes Netz nach einem der vorhergehenden Ansprüche, **dadurch gekennzeichnet, dass** es einen Nachstellmechanismus umfasst.

19. Umrahmtes Netz nach einem der vorhergehenden Ansprüche, **dadurch gekennzeichnet, dass** es sich bei dem Nachstellmechanismus um eine Sapnnfeder oder um eine Schraubvorrichtung handelt.

20. Werkzeug zur Herstellung eines mit einem thermoplastischen Kunststoff umrahmten Netzes, umfassend mindestens zwei Werkzeugteile, in deren Trennebene das Netz eingelegt werden kann, wobei die Werkzeugteile Kavitäten aufweisen, die die Form des zu bildenden Rahmens vorgeben und wobei die Werkzeugteile mit thermoplastischen Kunststoffen bespritzbar sind.

21. Werkzeug nach vorhergehendem Anspruch, **dadurch gekennzeichnet, dass** die Werkzeugteile so gefertigt sind, dass das Netz beim Schließen des Werkzeuges gespannt wird.

22. Werkzeug nach einem der vorhergehenden Ansprüche, **dadurch gekennzeichnet, dass** am Rande der Kavität zumindest im Bereich der Trennebene eine Abdichtung angebracht ist.

23. Werkzeug nach vorhergehendem Anspruch, **dadurch gekennzeichnet, dass** die Abdichtung mindestens bis auf Höhe der Trennebene reicht.

24. Werkzeug nach vorhergehendem Anspruch, **dadurch gekennzeichnet, dass** die Abdichtung über die Trennebene hinausragt.

25. Vorrichtung zur Herstellung eines umrahmten Netzes nach Anspruch 13, umfassend ein Werkzeug nach Anspruch 20 sowie eine Vorrichtung zum Spannen des Netzes.
